# EUROPEAN PATENT SPECIFICATION

(11) **EP 1 449 892 B1**
(45) Date of publication and mention of the grant of the patent: **21.06.2006**
(21) Application number: 04250858.0
(22) Date of filing: 18.02.2004
(51) Int. Cl.: C09D 5/03

(54) **Water-redispersible powder coating composition and method of preparing the same**
In Wasser redispergierbare pulverförmige Beschichtungszusammensetzung und Verfahren zu ihrer Herstellung
Composition de revêtement en poudre redispersable dans l'eau et procédé pour sa préparation

(30) Priority: 18.02.2003 JP 2003039214; 10.02.2004 JP 2004034080
(43) Date of publication of application: 25.08.2004
(73) Proprietor: Kansai Paint Co., Ltd, Amagasaki-shi, Hyogo-ken 661-0964 (JP)
(72) Inventor: Sugishima, Masami, Hiratsuka-shi, Kanagawa-ken, 254-0016 (JP); Sano, Makoto, Hiratsuka-shi, Kanagawa-ken, 254-0016 (JP); Suzuki, Kenya, Hiratsuka-shi, Kanagawa-ken, 254-0016 (JP)
(74) Representative: Stuart, Ian Alexander

(56) References cited:
- PATENT ABSTRACTS OF JAPAN vol. 016, no. 114 (C-0921), 23 March 1992 (1992-03-23) & JP 03 285963 A (PENTEL KK), 17 December 1991 (1991-12-17)
- DATABASE WPI Section Ch, Week 198840 Derwent Publications Ltd., London, GB; Class A82, AN 1988-283533 XP002277504 & SU 1 381 144 A (LENGD PIGMENT RES), 15 March 1988 (1988-03-15)

## Description

The present invention relates to a powdery coating composition which contains a minimum amount of dust, is easy to handle and is water redispersible and to a method of preparing the powdery coating composition.

### Description of Background Art:

Recently, become desirable due to enviremental protection synthetic resins used in a coating material, and additives are used as water dispersions, for example, water-dispersible resins or water-soluble resins, instead of solvent based resins, for reasons such as non-environmental pollution, saving of natural resources, and workability.

A resin in the form of a powder which is easily water-dispersed by adding water and mixing with agitation, is called a redispersible resin powder or an easily water-dispersible resin powder. Such powders have been used as a binder, e.g. in an engineering works, paper, adhesives and coating compositions, and as a mixing component of cement and mortar from the standpoints of easiness of transportation, storage, and waste disposal.

Powder coating compositions containing the above powder resin may include, for example, a powdery substrate leveling material and finish coating material, which contain a redispersible powder resin, cement component, calcium hydroxide, plaster, diatomaceous earth, inorganic lightweight aggregate, which are used in (e.g) a cement mortar coating, or plaster coating as mainly applied in architectural work, and which are mixed with water in use, followed by applying onto the surface of (e.g.) a wall (see Japanese Patent Application Laid-Open Nos. 2001-40277 and 2002-348168).

The above powder coating composition, however, produces such problems that dust develops in preparation and use, and that a composition formulated and mixed in a pack may cause blocking to take place during dispensing into a pack for use.

Further, the powder coating composition in the art is such that absence of an exclusive primary color or primary color paste makes color toning impossible, resulting in making it difficult to finish with a predetermined coating color. For example, W.O.00/60015 proposes a pigment product obtained by forming an easily water-dispersible resin powder, granule flake or pellet from the pigment, but does not disclose to form a powder coating composition.

JP 03 285 963A and SU 1 381 144 A disclose water-redispersible powder coating compositions containing granular pigments and resins.

### Summary of the Invention :

It is an object of the present invention to provide a powdery coating composition, which makes color toning possible, contains a minimum amount of dust, is easy to handle and has a water-redispersibility, and a method of preparing the powdery coating composition.

The present invention provides a powdery coating composition containing a redispersible granular resin powder and at least one granular color material, said powdery coating composition being liquefied by adding thereto an aqueous medium in use, and being water-redispersible. The resin powder has a mean particle size of 10-1000 µm and a bulk density of 0.01-0.6 g/ml. The granular color material has a mean particle size of 1-3000 mm and a bulk density in the range 0.2-0.6 g/ml. The granular resin powder is preferably obtainable by spray drying an emulsion obtained by (1) a method which comprises introducing into a resin emulsion a gas unreactable with a resin emulsion with a strong agitation to form a fine bubble, and dispersing the fine bubble into the resin emulsion and/or (2) a method which comprises dispersing a solvent fine particle insoluble in the resin emulsion into the resin emulsion.

Preferably, the granular color material has a hollow structure.

Preferably the powdery coating composition further contains at least one powdery filler selected from an extender pigment, lightweight aggregate, plaster, cement and calcium hydroxide powder and/or at least one powdery additive selected from thickening agent, anti-caking agent, curing agent, dispersant, anti-fungus agent, anti-foaming agent, film-forming assistant, reaction-controlling agent, and fiber.

The powdery coating composition may be prepared by a method which comprises metering and formulating the redispersible resin powder, granular color material, optionally the powdery filler and powdery additive respectively, followed by directly packing. The method preferably comprises feeding a selection of a coating composition and a total weight of the coating composition as the inputs to a computer, automatically determining a selection and formulating amount of respective powder components on the basis of a data base of a formulations of the coating compositions, and controlling feeding of respective powder components to a pack.

More preferably, respective powder components are metered and formulated in such an amount that a packing amount of the powdery coating composition to the pack is in the range of 10 to 80% based on a volume of the pack.

A powdery coating composition prepared by the above method may be prepared for use by adding an aqueous medium into the pack, followed by mixing with agitation and liquefying.

### Brief Description of the Drawing:

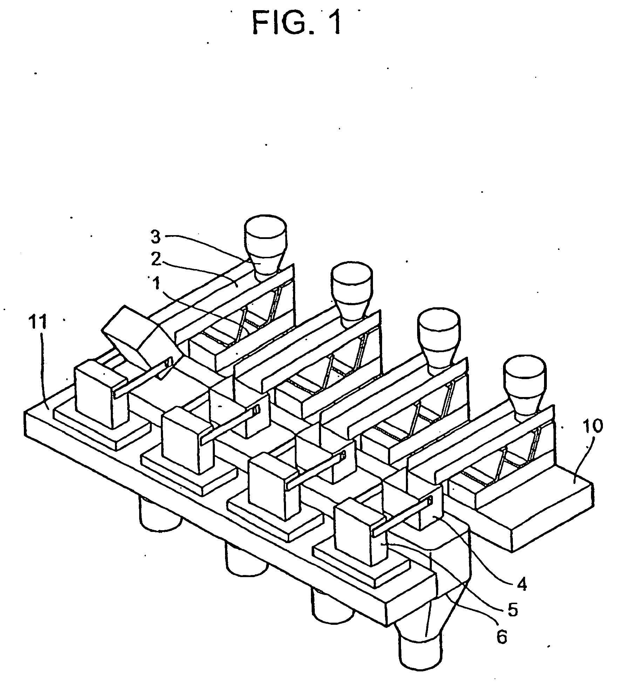

Fig. 1 is a schematic view showing an example of the metering and supply apparatus used in the preparation of the powdery coating composition of the present invention. In Fig. 1, 1 represents a magnetic feeder driving portion, 2 represents a carrier trough, 3 represents a hopper charged with respective powder components, 4 represents a bucket, 5 represents a metering device, and 6 represents a discharge shoot, and 10 and 11 represent a supporting base respectively.

### Detailed Description of the Invention:

The redispersible resin powder in the present invention may include any ones known in the art, and may be obtained by subjecting an emulsion of a resin such as vinyl acetate resin, ethylene vinyl acetate resin, or acrylic (styrene) resin to spray drying to form powder. The emulsion of the resin may also include an emulsion of a composite resin obtained by a known method such as a method of blending, forming a composite, forming a granule with a water based resin other than the above resin emulsion.

In the above resin emulsion, a known water-soluble polymer such as polyvinyl alcohol, cellulose derivatives, or water-soluble acrylic resin may be used as a protective colloid on emulsion polymerization from the standpoint of making sure redispersibility.

In the present invention, an emulsion obtained by subjecting a polymerizable unsaturated monomer such as (meth)acrylic ester, styrene, or an unsaturated carboxylic acid to emulsion polymerization in the presence of a radical polymer obtained by subjecting a monomer mixture containing carboxyl group-containing polymerizable unsaturated monomer, methacryloyl group-containing polymerizable unsaturated monomer, and optionally other polymerizable unsaturated monomer to a radical polymerization in the presence of 2,4-diphenyl-4-methyl-1-pentene (may also referred to as α-methylstyrene dimer) as an addition•cleavage chain transfer agent, as a protective colloid, may also be subjected to forming powder.

A powder-forming method of the resin emulsion may be, for example, a spray drying method, freeze drying method, or a vacuum drying method. Of these, the spray drying method is preferable from an economical point of view. The dried resin powder may be subjected to cutting a portion having a predetermined particle size or smaller through a filter disintegrator and the like so as to minimize an amount of dust. In the present invention, the redispersible resin powder is preferably a granular resin powder from the standpoint of ease of handling. The granular resin powder may mainly be spherical. It has a mean particle size in the range of 10 to 1000 µm, preferably 60 to 600 µm, and a bulk density in the range of 0.01 to 0.6 g/ml.

The granular resin powder may be obtained by spray drying an emulsion obtained by (1) a method which comprises introducing a gas unreactable with a resin emulsion with a strong agitation to form a fine bubble, resulting in dispersing the fine bubble into the resin emulsion and/or (2) a method which comprises dispersing a solvent fine particle insoluble in the resin emulsion into the resin emulsion.

In the method (1), the gas unreactable with the resin emulsion may not particularly be limited, but may include, for example, air, nitrogen, and carbon dioxide According to the method (1), the gas unreactable with the emulsion is introduced into the resin emulsion with strong agitation, essentially without pressurizing, to form fine bubbles so as to be dispersed. Specifically, the method (1) may be carried out by introducing 0.5 to 3 m³, preferably 1 to 1.5 m³ of air per 1 m³ of the emulsion into the emulsion in a dispersion mixer, so that strong agitation with an energy loss of 0.5 kwh/kg of suspension separates the introduced air to fine bubbles having a bubble size in the range of 20 µm or less in the emulsion.

In the above case, a dispersion apparatus capable of operating discontinuously or continuously, for example, Ultra-Turrax (trade name, marketed by IKA-Werke GMBH & Co., KG., Germany) or Dispax-Reaktor (trade name, marketed by IKA-Werke GMBH & Co., KG., Germany), may be used. In the case where Dispax-Reaktor is used, compressed air at 1 to 3 bar. as known in the art may be introduced into the emulsion while automatically introducing the surrounding air by use of Ultra-Turrax. In addition to the above apparatus, fine bubbles may be introduced into the emulsion by use of a bubble-generating apparatus such as an air pump or jet injection apparatus, or by combinations of various kinds of stirrers.

The method (1) is advantageous in that the resin emulsion can be handled during or after a gas treatment under standard pressure.

In the method (2), the solvent fine particle insoluble in the emulsion is an emulsified product comprising water as a continuous phase and an organic solvent as a discontinuous phase, and may be obtained by finely dispersing the organic solvent in the presence of water and optionally an emulsifying agent.

The organic solvent is preferably a hydrophobic organic solvent immiscible with water, and may include, for example, an aliphatic hydrocarbon solvent such as n-hexane, n-octane, 2,2,2-trimethylpentane, isooctane, n-nonane, cyclohexane, or methylcyclohexane; an aromatic solvent such as toluene or xylene; a petroleum solvent such as mineral spirit, Swasol 1000 (trade name, marketed by Maruzen Petrochemicals Co., Ltd.), petroleum ether, petroleum benzene, or petroleum naphtha; ketone solvent such as methyl ethyl ketone or methyl isobutyl ketone; or an ester solvent such as butyl acetate. These may be used alone or in combination. Of these, the organic solvent having a boiling point higher than that of water may preferably be selected. The hydrophobic organic solvent may optionally be partly mixed with a water-miscible organic solvent such as alcohol solvent, ether solvent or alcohol ether solvent. An amount of the water-miscible organic solvent may preferably be in the range of 20% by weight or less based on an amount of all of the organic solvents.

An amount of the organic solvent to be dispersed into water may be in the range of 20 to 80 parts by weight per 100 parts by weight of a total amount of the water and organic solvent.

The emulsifying agent may include an anionic emulsifying agent and a nonionic emulsifying agent as known in the art. The anionic emulsifying agent may include, for example, sodium alkylbenzene sulfonate, sodium dialkylsulfosuccinate, sodium dodecylbenzene sulfonate, sodium lauryl sulfate, polyoxyethylene alkyl ether sulfate, polyoxyethylene polycyclic phenyl ether sulfate, polyoxyethylene allyl ether sulfate, or polyoxyethylene alkylphenyl ether sulfate. The nonionic emulsifying agent may include, for example, polyoxyethylene alkylphenyl ether, polyoxyethylene alkyl ether, or polyoxyethylene-polyoxypropylene block copolymer.

The solvent fine particle may be obtained by a method of adding water, while stirring a mixture of the organic solvent and the emulsifying agent by use of a dispersing mixer, a method of adding an aqueous emulsifying agent solution prepared beforehand by dissolving the emulsifying agent in water, while stirring the organic solvent, e.g. by use of a dispersing mixer, or a method of optionally applying a high energy to forcibly disperse and emulsify.

An apparatus capable of dispersing by applying high energy may include, for example, an apparatus capable of obtaining a high energy in the form of a thin film by a centrifugal force as disclosed in Japanese Patent No. 2577314 (T.K. Filmics, trade name, marketed by Tokushu Kika Kogyo Co., Ltd.), or a dispersing mixer capable of forcedly dispersing into water in the form of a fine liquid drop by applying an ultrahigh pressure energy so as to collide fluids with each other. The dispersing mixer to apply the ultrahigh pressure energy may include, for example, an ultrahigh pressure homogenizer which generates at least one of cavitation, turbulence, shearing force or impact force due to collision of fluid against a wall of a flow path in an ultrahigh pressure-applying dispersing chamber, collision between fluids and discharge so as to disperse, resulting in dispersing and grinding to be finely dispersed. Specifically, examples of the trade name may include Nanomizer (trade name, marketed by Daiwa Can Company), and Ultimaizer (trade name, marketed by Sugino Machine Ltd.).

A water dispersion of the solvent fine particle as above, and the solvent fine particle has a mean particle size in the range of 0.01 to 100 µm, preferably 0.05 to 60 µm.

In the method (2), the water dispersion of the solvent fine particle may be introduced and dispersed in an amount of 10 to 100 parts by weight, preferably 20 to 80 parts by weight as the amount of the organic solvent per 100 parts by weight of the resin emulsion A bulk density and particle size of the granular resin powder may arbitrarily be controlled depending on an introduced amount of the bubble or solvent fine particle, a type, pressure and rotating speed of a spray coater, a concentration and viscosity of the resin emulsion to be fed.

The granular color material in the present invention may include a non-dusting uniform pigment formulation known in the art without particular limitations, and may preferably include a color material such as white, red, blue, green, yellow or black, which is such that the granular particle is mainly spherical, and has a mean particle size 1 to 3,000 µm, preferably 20 to 2,000 µm and a bulk density of 0.2 to 0.6 g/ml. The granular color material preferably has a hollow structure from the standpoint of easy dispersibility.

The granular color material may be prepared as a granular pigment formulation by a method which comprises adding 5 to 30% by weight of an additive such as a nonionic surface active agent to a synthesized pigment for suspension, followed by introducing a gas, or adding a water dispersion of the solvent fine particle as above described, and spray drying as in the granular resin powder. The pigment may include inorganic pigment and organic pigment known in the art as used in the field of coating compositions and inks without particular limitations. Particularly, in the case where the organic solvent fine particle insoluble in the suspension is added to the aqueous suspension of the pigment, the organic solvent fine particle may be introduced and dispersed in an amount of 10 to 100 parts by weight, preferably 20 to 80 parts by weight as an amount of the organic solvent per 100 parts by weight of the aqueous suspension of the pigment, and the resulting pigment suspension may be subjected to spray drying according to the known method.

The powdery coating composition of the present invention contains at least one granular color material mixing amount of the granular color material may arbitrarily be selected depending on a predetermined coating color, but usually is in the range of 0.1 to 200 parts by weight, preferably 0.5 to 100 parts by weight. The use of a color pigment other than the granular color material makes difficult to obtain uniformness in color after redissolution in water,and may develop discoloration on coating a coating composition using the color pigment.

The powdery coating composition of the present invention optionally contains at least one powdery filler selected from extender pigments, lightweight aggregate, plaster, cement and calcium hydroxide powder and/or at least one powdery additive selected from thickening agents, anti-caking agents, curing agents, dispersants, anti-fungus agents, anti-foaming agents, film-forming assistans, reaction-controlling agents, and fibers.

Of these, the anti-caking agent may preferably include a fine particle inorganic powder such as the extender pigment, for example, calcium carbonate, clay, silicic anhydride, aluminum silicate, silica, talc, or alumina white. An amount of the anti-caking agent is is preferably in the range of 20 parts by weight or less, more preferably 0.1 to 20 parts by weight per 100 parts by weight of the resin powder.

A method of adding the anti-caking agent to the resin powder may include a method of adding to the resin powder formed after drying, followed by uniformly mixing, and a method of spraying the anti-caking agent simultaneously on drying the resin emulsion.

The latter method may be preferable, as the case may be, in that a uniform mixing and selective surface adhesion properties may be obtained, and that an anti-caking effect may be obtained in a small amount.

The powdery coating composition of the present invention may be prepared by a method which comprises metering and formulating the redispersible resin powder, granular color material, and optionally the powdery filler and powdery additive, followed by directly packing. The pack may be, for example, a paper pack such as a waterproof paper bag or a waterproof paper box, metal can, plastic can, plastic pack such as a standing pouch, without particular limitations. A pack volume may arbitrarily be selected depending on uses and necessary amounts. Respective powder components may be metered and formulated into the pack as a product.

The above metering and formulation may be carried out by arbitrarily metering respective powder components, followed by successively formulating, but preferably may be carried out by a method which comprises feeding a selection of a predetermined coating composition and a total weight of the coating composition as the inputs to a computer with a data base prepared beforehand of formulations of the coating composition corresponding to respective uses, automatically determining a selection and formulating amounts of respective powder components on the basis of the data base of a predetermined formulation of the coating composition, and controlling feeding of respective powder components to a pack.

Respective powder components are preferably metered and formulated in such an amount that a packing amount of the powdery coating composition to the pack is in the range of 10 to 80% based on a volume of the pack, such that, in use, the aqueous medium can be added into the pack, followed by mixing with agitation to liquefy the composition, with no splash development. In the present invention, "in use" means just before use for coating, or a predetermined period of time before use for coating, and may mean that a liquefied coating composition prepared by addition of the aqueous medium may be left to stand for a predetermined period of time.

A metering means of the powder components may include any metering device known in the art provided that an accurate metering is possible on a weight basis or volume basis, and may include, for example, a means such that an operator may meter a predetermined amount of powder components and formulate into a pack, preferably a means which comprises discharging respective powder components into a pan portion of the metering device through a supply path from a container such as a hopper charged with respective powder components followed by metering a weight of the powder component falling down, a means which comprises metering a weight of a hopper charged with the powder components and of a supply path as a whole and deducting a discharged weight followed by metering, and a means which comprises carrying out a volume metering by use of flow meter on the supply path. The discharge, metering, and supply to a pack of powder components as required, according to a metering instruction, are preferably controlled automatically by a computer.

An example of an automatically controlled metering and supply apparatus is shown in Fig. 1. In Fig. 1, 1 represents a magnetic feeder driving portion, 2 represents a carrier trough, 3 represents a hopper charged with respective powder components, 4 represents a bucket, 5 represents a metering device, and 6 represents a discharge shoot. The carrier troughs 2 are carrier paths which carry powder components discharged from respective hoppers. The carrying is controlled by driving of the magnetic feeder driving portion 1. The bucket 4 receiving the powder components falling from the carrier trough 2 is mounted on the metering device 5, which meters the total weight of the bucket 4 including the powder components received as above. The metered powder components from the bucket 4 are through the discharge shoot 6 supplied to a pack (not shown) as a product. The apparatus as shown in Fig. 1 is suitable for a metering and supply of granular resin powder and granular color material.

The powder components may easily be affected by humidity depending on kind of the powder components, so that the hopper charged with the powder components and supply path thereof may preferably be subjected to a moistureproofing measure such as covering of the apparatus as a whole with a glass plate or acrylic plate, mounting a lip on the hopper, circulating a dry air or inert gas, or providing a hygroscopic agent.

A carrying method of respective powder components may include various kinds of feeders, and preferably a magnetic vibrating feeder capable of smoothly carrying powder components. The magnetic vibrating feeder is such that vibration applied to the carrier path makes it possible to control a supply speed of the powder components on the carrier path.

A means to uniformly stir and mix the respective powder components charged in a pack as a product may include a stirring device known in the art, which is capable of uniformly stirring by subjecting a closed pack charged with the coating composition to rotation or vibration, for example, a gyromixer. It preferably may include a means such that in the case where starting materials are all powdery, and metered and packed as above, stirring on forming a liquid coating composition by adding a necessary water in situ on coating makes possible a uniform mixing, resulting in making it possible to eliminate the stirring after packing of the coating composition, and resulting in obtaining a packed powder coating composition deliverable and usable as a product as it its.

The present invention can provide a powdery coating composition, which makes color toning possible, contains a minimum amount of dust, is easy to handle and is water-redispersible.

The present invention is applicable to (e.g.) a cement mortar coating and a plaster coating as mainly applied in architectural work.

### Example

The present invention is explained more in detail by referring to Examples, in which "part" and "%" represent "part by weight" and "% by weight" respectively.

### Example 1

### Preparation of Emulsion Powder A

A flask equipped with a reflux condenser, dropping funnel, thermometer, nitrogen-introducing inlet and stirrer was charged with 50 parts of polyvinyl alcohol (PVA, degree of polymerization 500, degree of saponification 88.0 mol%), 470 parts of deionized water, 2.5 parts of Neopelex No. 6 (trade name, marketed by Kao Corporation, sodium dodecylbenzene sulfonate, effective ingredient 60%), 1.0 part of sodium persulfate and 2.5 parts of sodium bicarbonate, followed by stirring at 76°C while introducing nitrogen, charging 130.4 parts of a preemulsion prepared by mechanically and forcedly dispersing a mixture of 700 parts of vinyl acetate, 300 parts of Veoba 10 (trade name, marketed by Japan Epoxy Resins Co., Ltd., versatic acid vinyl ester), 20 parts of polyoxyethylene sorbitane monolaurate, 2.3 parts of Neopelex No. 6 (above trade name), 2.5 parts of sodium bicarbonate and 330 parts of deionized water, stirring at 76°C for one hour, dropping a mixture of the remaining amount of the preemulsion, 2.5 parts of sodium persulfate and 130 parts of deionized water over 3 hours, stirring at that temperature for 2 hours, and cooling to obtain a stable polyvinyl acetate emulsion having a solid content of 53.2% (resin Tg 21°C).

An emulsion prepared by adding a solution obtained by dissolving 5 parts of the polyvinyl alcohol into 100 parts of water to 100 parts of the above emulsion was charged, followed by treating in the atmosphere for 5 minutes by use of Ultra-Turrax (trade name, marketed by Fa. Janke und Kunkel; Stauffen/Breisgan), introducing air bubbles to increase a volume of the emulsion by twofold, spray drying the emulsion in a hot air at 100°C, separating from an air flow carried together into a cyclone to obtain an emulsion powder A having a mean particle size of 100 µm and a bulk density of 0.3 g/ml.

### Preparation of granular titanium white particle

To 150 parts of tap water were added 3 parts of Noigen EA-120 (trade name, marketed by Dai-ichi Kogyo Seiyaku Co., Ltd., nonionic surface active agent) and 150 parts of mineral spirit, followed by forcedly emulsifying by use of a homogenizer to obtain a dispersion P of a solvent fine particle having a mean particle size of about 2 µm

To 100 parts of the solvent fine particle dispersion P was added one part of Noigen EA-120, followed by stirring with a dispersion mixer, while adding 25 parts of Titanium White JR-605 (trade name, marketed by Tayka Corporation, mean particle size,0.25 bulk density 4.1 g/ml, titanium white) so as to be uniform, and spray drying in hot air at 100°C to obtain a granular titanium white (1) having a mean particle size of 100 µm and a bulk density of 0.5 g/ml as a spherical particle.

### Preparation of granular red oxide color material

To 100 parts of the solvent fine particle dispersion P was added 2 parts of Noigen EA-120 (as above, trade name), followed by stirring with a dispersion mixer, while adding 25 parts of Bengala 335R (trade name, marketed by Toda Kogyo Corp., mean particle size 0.14 µm, bulk density 5.2 g/ml, red oxide) so as to be uniform, and spray drying in hot air at 100°C to obtain a granular red oxide color material (2) having a mean particle size of 200 µm and a bulk density of 0.45 g/ml as a spherical particle.

### Preparation of powdery coating composition

Into a sealable inner-coat can were charged the following starting materials, while successively weighing

| | |
|---|---|
| Emulsion Powder A | 100 parts |
| Granular titanium white (1) | 60 parts |
| Granular red oxide color material (2) | 2 part |
| Metolose 65 SH-1500 (Note 1) | 0.3 part |
| SN Defoamer 14HP (Note 2) | 1 part |

After formulating, the can was sealed, followed by lightly shaking the can by hand to obtain an intended powdery coating composition (I).
(Note 1) Metolose 65 SH-1500: trade name, marketed by Shinetsu Chemical Co., Ltd., thickening agent.
(Note 2) SN Defoamer 14HP: trade name, marketed by San Nopco Ltd., anti-foaming agent.

### Example 2

### Preparation of Emulsion Powder B

A polyvinyl acetate emulsion having a solid content of 53.2% was obtained in the same manner as in Example 1, followed by adding a dispersion prepared by dissolving 5 parts of polyvinyl alcohol (PVA, degree of polymerization 500, degree of saponification 88.0 mol%) in 100 parts of the solvent fine particle dispersion P to 100 parts of the above emulsion to obtain an emulsion, spray drying the emulsion in hot air at 100°C, separating from an air flow carried together into a cyclone to obtain an emulsion powder B having a mean particle size of 200 µm and a bulk density of 0.2 g/ml

### Preparation of Powdery Coating Composition

Into a sealable inner coat can were charged the following starting materials, while successively weighing

| | |
|---|---|
| Emulsion Powder B | 100 parts |
| Granular titanium white (1) | 60 parts |
| Granular red oxide color material (2) | 2 parts |
| Tancal No. 300 (Note 3) | 100 parts |
| Guaranteed Clay W (Note 4) | 100 parts |
| Calcium hydroxide | 3 parts |
| Metolose 65 SH-1500 (Note 1) | 0.1 part |
| SN Defoamer 14 HP (Note 2) | 1 part |

After formulating, the can was sealed, followed by lightly shaking the can by hand to obtain an intended powdery coating composition (II).
(Note 3) Tancal No. 300: trade name, marketed by Takehara Kagaku Kogyo Co., Ltd., calcium carbonate.
(Note 4) Guaranteed Clay W: trade name, marketed by Takehara Kagaku Kogyo Co., Ltd., clay.

### Example 3

Into a sealable PET bottle were charged the following materials, while successively weighing.

| | |
|---|---|
| Pegar PM450 (Note 5) | 100 parts |
| Granular titanium white (1) | 60 parts |
| Granular red oxide color material (2) | 2 parts |
| Tancal No. 300 (Note 3) | 100 parts |
| Guaranteed Clay W (Note 4) | 100 parts |
| Calcium hydroxide | 3 parts |
| Metolose 65 SH-1500 (Note 1) | 0.1 part |
| SN Defoamer 14 HP (Note 2) | 1 part |

After formulating, the bottle was sealed, followed by lightly shaking the bottle by hand to obtain an intended powdery coating composition (III)
(Note 5) Pegar PM450: trade name, marketed by Koatsu Gas Kogyo Co., Ltd., redispersible resin powder.

### Example 4

### Preparation of Emulsion Powder C

To 150 parts of tap water were added 3 parts of Noigen EA-120 (trade name, marketed by Dai-ichi Kogyo Seiyaku Co., Ltd., nonionic surface active agent) and 150 parts of mineral spirit, followed by forcedly emulsifying by use of T.K. Filmics (trade name, marketed by Tokushu Kikai Kogyo Co., Ltd.) to obtain a dispersion Q of solvent fine particle.

A dispersion prepared by dissolving 5 parts of polyvinyl alcohol (PVA, degree of polymerization 500, degree of saponification 88.0 mol%) in 100 parts of the solvent fine particle dispersion Q was added to Yodosol GFIT (trade name, marketed by Nippon NSC Ltd., 45% styrene-acrylic emulsion) to obtain an emulsion, followed by spray drying the emulsion in hot air at 100°C, separating from an air slow carried together into a cyclone to obtain an emulsion powder C having a mean particle size of 150 µm and a bulk density of 0.25 g/ml.

### Preparation of Powdery Coating Composition

Into a scalable inner coat can were charged the following starting materials, while successively weighing

| | |
|---|---|
| Emulsion Powder C. | 100 parts |
| Granular titanium white (1) | 60 parts |
| Granular red oxide color material (2) | 2 parts |
| Tancal No. 300 (Note 3) | 100 parts |
| Guaranteed Clay W (Note 4) | 100 parts |
| Calcium hydroxide | 3 parts |
| Metolose 65 SH-1500 (Note 1) | 0.1 part |
| SN Defoamer 14 HP (Note 2) | 1 part |

After formulating, the can was sealed to obtain an intended powdery coating composition (IV).

### Example 5

### Preparation of Coating Composition

Into a powder mixer were charged the following starting materials, while successively weighing.

| | |
|---|---|
| Pegar PM 450 (Note 5) | 100 parts |
| Granular titanium white (1) | 60 parts |
| Bengala 335 R (the above trade name) | 2 parts |
| Tancal No. 300 (Note 3) | 100 parts |
| Guaranteed Clay W (Note 4): | 100 parts |
| Calcium hydroxide | 3 parts |
| Metolose 65 SH-1500 (Note 1) | 0.1 part |
| BYK 024 (Note 6) | 1 part |

Stirring was followed by packing into a pack to obtain a powdery coating composition (V).
(Note 6) BYK 024: trade name, marketed by BYK-CHEMIE, liquid anti-foaming agent).

### Example 6

### Preparation of Emulsion Powder E

A flask equipped with a reflux condenser, dropping funnel, thermometer, nitrogen-introducing inlet and stirrer was charged with 471.2 parts of ethylene glycol monobutyl ether and 118 parts of 2,4-diphenyl-4-methyl-1-pentene, followed by stirring while introducing nitrogen at 60°C, dropping a mixture of 781 parts of isobutyl methacrylate, 344 parts of methacrylic acid and 87.2 parts of di-tertiary amyl peroxide over 4 hours, stirring at that temperature for 3 hours, and cooling to obtain a resin (E-1) solution having a solid content of 72%.

A flask was charged with 43 parts of the resin (E-1) solution, 225 parts of deionized water, 21 parts of 20% aqueous sodium hydroxide solution and 0.3 part of ammonium persulfate, followed by stirring at 82°C while introducing nitrogen, dropping over 4 hours a preemulsion prepared by mechanically and forcedly dispersing a mixture of 150 parts of butyl acrylate, 90 parts of methyl methacrylate, 60 parts of styrene, 3 parts of methacrylic acid, 20 parts of Newcowl 707SF (trade name, marketed by Nippon Nyukazai Co., Ltd., anionic emulsifying agent, solid content 30%), 0.6 part of ammonium persulfate and 230 parts of deionized water, stirring at that temperature for 2 hours, and cooling to obtain an Emulsion (E-2) having a solid content of 40%.

A solution prepared by dissolving 5 parts of the polyvinyl alcohol into 100 parts of water and 100 parts of the emulsion (E-2) were charged, followed by treating for 5 minutes in the atmosphere by use of Ultra-Turrax (trade name, marketed by IKA-Werke GMBH & Co., KG.), introducing air bubbles so as to increase a volume of the emulsion by twofold, spray drying the emulsion in hot air at 100°Cand separating from an air flow carried together into a cyclone to obtain an emulsion powder E.

### Preparation of Coating Composition

Into a sealable inner coat can were charged the following starting materials, while successively weighing respectively.

| | |
|---|---|
| Emulsion Powder E | 100 parts |
| Granular titanium white (1) | 60 parts |
| Granular red oxide color material (2) | 2 parts |
| Metolose 65 SH-1500 (Note 1) | 0.3 part |
| SN Defoamer 14 HP (Note 2) | 1 part |

After formulating, the can was sealed, followed by lightly shaking the can by hand to obtain a powdery coating composition (VI).

### Example 7

### Preparation of Emulsion Powder F

A dispersion prepared by dissolving 5 parts of polyvinyl alcohol (PVA, degree of polymerization 500, degree of saponification 88.0 mol%) in 100 parts of solvent fine particle dispersion Q was added to 100 parts of Emulsion (E-2) having solid content of 40% as obtained in Example 6 to obtain an emulsion, followed by spray drying the emulsion in hot air at 100°C, separating from an air flow carried together into a cyclone to obtain an emulsion powder F.

### Preparation of Coating Composition

Into a sealable inner coat can were charged the following starting materials, while successively weighing.

| | |
|---|---|
| Emulsion Powder F | 100 parts |
| Glanular titanium white (1) | 60 parts |
| Granular red oxide color material (2) | 2 parts |
| Tancal No.300 (Note 3) | 100 parts |
| Guaranteed Clay W (Note 4) | 100 parts |
| Calcium hydroxide | 3 parts |
| Metolose 65 SH-1500 (Note 1) | 0.1 part |
| SN Defoamer 14 HP (Note 2) | 1 part |

After formulating, the can was sealed, followed by lightly shaking the can by hand to obtain a powdery coating compositions (VII):

### Comparative Example 1

### Preparation of Coating Composition

Into a powder mixer were charged the following starting materials, while successively weighing.

| | |
|---|---|
| Emulsion Powder C | 100 parts |
| Titanium White JR-605 | 60 parts |
| (the above trade name) | |
| Bengala 335R (the above trade name) | 2 parts |
| Tancal No. 300 (Note 3) | 100 parts |
| Guaranteed Clay H (Note 4) | 100 parts |
| Calcium hydroxide | 3 parts |
| Metolose 65 SH-1500 (Note 1) | 0.1 part |
| BYK 024 (Note 6) | 1 part |

After stirring, the resulting formulation was packed to obtain a powdery boating composition (VIII).

### Water Solubility Evaluation of Powdery Coating Compositions

Tops of respective coating composition-packed packs were opened, followed, by mixing 60 parts of respective powdery coating compositions (I) to (VIII) with 40 parts of water respectively, stirring by use of a simple stirrer such as a paint mixer, and evaluating water dispersibility of respective powdery coating compositions as follow. Results are shown in Table 1.

### Evaluation Criteria:

⊚ : Stirring of 1 to 2 minutes shows no spitting and shows normal conditions as the water based coating composition.
○ : Stirring of 3 to 4 minutes shows no spitting and shows normal conditions as the water based coating composition. Δ : Stirring of 5 minutes results dissolution as a whole, but shows some spittings.
× : Stirring of 5 minutes shows many non-dissolved remains.

### Evaluation of Coating Workability

Respective liquid coating compositions prepared in the same manner as in the above water solubility evaluation were coated onto a slate plate coated with EP Sealer White (trade name, marketed by Kansai Paint Co., Ltd., sealer), by use of a brush at a coating weight of about 100 g/m², one minute after followed by rubbing a part of the coated plate with a finger so as to rotate 5 times to form a rubbing area. Next day, appearance of the coating surface and color difference between the brush coating surface and rubbing area surface were evaluated on the following evaluation criteria. Results are shown in Table 1

### Evaluation Criteria:

⊚ : The coating surface shows no spitting with no color difference.
○ : The coating surface shows a little spittings with no color difference
Δ : The coating surface shows remarkable spitting with remarkable color difference.
× : Formation of lines on coating due to spittings makes impossible coating.

**Table 1**

| | Examples | | | | | | | Comparative Example |
|---|---|---|---|---|---|---|---|---|
| | 1 | 2 | 3 | 4 | 5 | 6 | 7 | 1 |
| Water solubility evaluation of powdery coating composition | ⊚ | ⊚ | ○ | ○ | ○ | ○ | ○ | Δ |
| Coating workability evaluation | ⊚ | ○ | ○ | ○ | Δ | ○ | ○ | × |

## Claims

1. A powdery coating composition containing a redispersible granular resin powder and at least one granular color material, said powdery coating composition being liquefiable by adding thereto an aqueous medium in use, and being water-redispersible, the granular resin powder having a mean particle size in the range 10 to 1000 µm and a density in the range of 0.01 to 0.6 g/ml, and the granular colour material having a mean particle size of 1 to 3000 µm and a bulk density in the range 0.2 to 0.6 g/ml.

2. A powdery coating composition as claimed in claim 1 wherein the granular resin powder is obtainable by spray drying an emulsion obtained by (1) a method which comprises introducing into a resin emulsion a gas unreactable with the resin emulsion with strong agitation to form a fine bubble, which is dispersed in the resin emulsion and/or (2) a method which comprises dispersing a solvent fine particle insoluble in the resin emulsion into the resin emulsion.

3. A powdery coating composition as claimed in claim 1 or 2, wherein the granular color material has a hollow structure.

4. A powdery coating composition as claimed in claim 1, 2 or 3 wherein said powdery coating composition further contains at least one powdery filler selected from an extender pigment, lightweight aggregate, plaster, cement and calcium hydroxide powder and/or at least one powdery additive selected from thickening agent, anti-caking agent, curing agent, dispersant, anti-fungus agent, anti-foaming agent, film-forming assistant, reaction-controlling agent, and fiber.

5. A method of preparing the powdery coating composition as claimed in any one of claims 1 to 4, which method comprises metering and formulating the redispersible resin powder, granular color material, optionally the powdery filler and powdery additive respectively, followed by directly packing.

6. A method of preparing the powdery coating composition as claimed in claim 5, which method comprises feeding a selection of a coating composition and a total weight of the coating composition as the inputs to a computer, automatically determining a selection and formulating amount of respective powder components on the basis of a data base of a formulation of the coating composition, and controlling feeding of respective powder components to a pack.

7. A method of preparing the powdery coating composition as claimed in claim 5 or 6, wherein respective powder components are metered and formulated in a packing amount of the powdery coating composition to the pack in the range of 10 to 80% based on a volume of the pack.

8. A method of preparing the powdery coating composition as claimed in claim 5, 6 or 7 wherein the granular resin powder is obtained spray drying an emulsion obtained by (1) a method which comprises introducing into a resin emulsion a gas unreactable with the resin emulsion with strong agitation to form a fine bubble, and dispersing the fine bubble into the resin emulsion and/or (2) a method which comprises dispersing a solvent fine particle insoluble in the resin emulsion into the resin emulsion.

9. A method of using the powdery coating composition prepared by the method as claimed in claim 7, which method comprises, in use, adding an aqueous medium into the pack, followed by mixing with agitation and liquefying.

## Patentansprüche

1. Pulverförmige Beschichtungszusammensetzung, die ein redispergierbares, granuliertes Harzpulver und zumindest ein granuliertes Farbmaterial enthält, wobei die pulverförmige Beschichtungszusammensetzung bei Verwendung durch Zusatz eines wässrigen Mediums verflüssigbar ist und redispergierbar ist, wobei das granulierte Harzpulver einen mittleren Teilchendurchmesser im Bereich von 10 bis 1000 µm und eine Schüttdichte im Bereich von 0,01 bis 0,6 g/ml aufweist und das granulierte Farbmaterial eine mittlere Teilchengröße von 1 bis 3000 µm und eine Schüttdichte im Bereich von 0,2 bis 0,6 g/ml aufweist.

2. Pulverförmige Beschichtungszusammensetzung nach Anspruch 1, worin das granulierte Harzpulver durch Sprühtrocknen einer Emulsion erhältlich ist, die durch (1) ein Verfahren, das die Einführung eines nicht mit der Harzemulsion umsetzbaren Gases in eine Harzemulsion unter starkem Rühren umfasst, um in der Harzemulsion dispergierte kleine Bläschen zu bilden, und/oder (2) ein Verfahren, welches das Dispergieren von in der Harzemulsion unlöslichen Lösungsmittelfeinteilchen in der Harzemulsion umfasst, erhalten wurde.

3. Pulverförmige Beschichtungszusammensetzung nach Anspruch 1 oder 2, worin das granulierte Farbmaterial eine Hohlstruktur aufweist.

4. Pulverförmige Beschichtungszusammensetzung nach Anspruch 1, 2 oder 3, worin die pulverförmige Beschichtungszusammensetzung weiters zumindest einen pulverförmigen Füllstoff, ausgewählt aus Extenderpigmenten, Leichtzuschlag, Gips, Zement und Calciumhydroxidpulver, und/oder zumindest ein pulverförmiges Additiv, ausgewählt aus Verdickungsmitteln, Rieselhilfen, Härtern, Dispergiermitteln, Fungiziden, Schaumverhütungsmitteln, Filmbildungshilfen, Reaktionsreglern und Fasern, umfasst.

5. Verfahren zur Herstellung einer pulverförmigen Beschichtungszusammensetzung nach einem der Ansprüche 1 bis 4, wobei das Verfahren das Zudosieren und Formulieren des redispergierbaren Harzpulvers, des granulierten Farbmaterials, gegebenenfalls des pulverförmigen Füllstoffs bzw. pulverförmigen Additivs, gefolgt von direktem Verpacken umfasst.

6. Verfahren zur Herstellung einer pulverförmigen Beschichtungszusammensetzung nach Anspruch 5, wobei das Verfahren das Eingeben der Auswahl für eine Beschichtungszusammensetzung und eines Gesamtgewichts der Beschichtungszusammensetzung als Input in einen Computer, das automatische Bestimmen der Auswahl und Formulierungsmenge von einzelnen Pulverkomponenten auf Basis einer Datenbank einer Formulierung der Beschichtungszusammensetzung, sowie das Kontrollieren des Einfüllens der jeweiligen Pulverkomponenten in eine Verpackung umfasst.

7. Verfahren zur Herstellung einer pulverförmigen Beschichtungszusammensetzung nach Anspruch 5 oder 6, worin die einzelnen Pulverkomponenten in einer Verpackungsmenge im Bereich von 10 bis 80 %, bezogen auf das Volumen der Verpackung, in die Verpackung zudosiert und formuliert werden.

8. Verfahren zur Herstellung einer pulverförmigen Beschichtungszusammensetzung nach Anspruch 5, 6 oder 7, worin das granulierte Harzpulver durch Sprühtrocknen einer Emulsion erhalten wurde, die durch (1) ein Verfahren, das die Einführung eines nicht mit der Harzemulsion umsetzbaren Gases in eine Harzemulsion unter starkem Rühren, um kleine Bläschen zu bilden, und das Dispergieren der kleinen Bläschen in der Harzemulsion umfasst, und/oder (2) ein Verfahren, welches das Dispergieren von in der Harzemulsion unlöslichen Lösungsmittel-Feinteilchen in der Harzemulsion umfasst, erhalten wurde.

9. Verfahren zur Verwendung der durch das Verfahren nach Anspruch 7 hergestellten pulverförmigen Beschichtungszusammensetzung, wobei das Verfahren bei der Verwendung das Zusetzen eines wässrigen Mediums zur Verpackung, gefolgt von Vermischen unter Rühren und Verflüssigen umfasst.

## Revendications

1. Composition de revêtement en poudre contenant une poudre de résine granulaire redispersible et au moins une matière de couleur granulaire, ladite composition de revêtement en poudre étant liquéfiable en lui ajoutant un milieu aqueux en utilisation et étant redispersible dans l'eau, la poudre de résine granulaire ayant une dimension moyenne de particules dans la gamme de 10 à 1000 µm et une densité apparente dans la gamme de 0,01 à 0,6 g/ml, et la matière de couleur granulaire ayant une dimension moyenne des particules de 1 à 300 µm et une densité apparente dans la gamme de 0,2 à 0,6 g/ml.

2. Composition de revêtement en poudre selon la revendication 1, où la poudre de résine granulaire peut être obtenue par séchage par pulvérisation d'une émulsion obtenue par (1) une méthode qui comprend l'introduction, dans une émulsion de résine, d'un gaz ne pouvant réagir avec l'émulsion de résine avec forte agitation pour former une bulle fine qui est dispersée dans l'émulsion de résine et/ou (2) une méthode qui comprend la dispersion, dans un solvant, d'une particule fine insoluble dans l'émulsion de résine, dans l'émulsion de résine.

3. Composition de revêtement en poudre selon la revendication 1 ou 2, où la matière de couleur granulaire a une structure creuse.

4. Composition de revêtement en poudre selon la revendication 1, 2 ou 3, où ladite composition de revêtement en poudre contient de plus au moins une charge pulvérulente sélectionnée parmi un pigment de charge, un agrégat léger, du plâtre, du ciment et de l'hydroxyde de calcium en poudre et/ou au moins un additif pulvérulent sélectionné parmi un agent épaississant, un agent anti-agglomération, un agent durcissant, un dispersant, un agent anti-fongique, un agent anti -mousse, un auxiliaire de formation de film, un agent contrôlant la réaction et une fibre.

5. Méthode de préparation de la composition de revêtement en poudre selon l'une quelconque des revendications 1 à 4, laquelle méthode comprend le dosage et la formulation de la poudre de résine redispersible, de la matière de couleur granulaire, facultativement de la charge pulvérulente et de l'additif pulvérulent, respectivement, avec ensuite tassement direct.

6. Méthode de préparation de la composition de revêtement en poudre selon la revendication 5, laquelle méthode comprend la fourniture d'une sélection d'une composition de revêtement et d'un poids total de la composition de revêtement aux entrées d'un ordinateur, la détermination automatique d'une sélection et la formulation de la quantité des composants respectifs de poudre sur la base d'une base de données, d'une formulation de la composition de revêtement et le contrôle de la fourniture des composants respectifs de poudre à un ensemble.

7. Méthode de préparation de la composition de revêtement en poudre selon la revendication 5 ou 6, où les composants respectifs de poudre sont dosés et formulés en une quantité de tassement de la composition de revêtement en poudre pour être tassés dans la gamme de 10 à 80% en se basant sur un volume de l'ensemble.

8. Méthode de préparation d'une composition de revêtement en poudre selon la revendication 5, 6 ou 7, où la poudre de résine granulaire peut être obtenue par séchage par pulvérisation d'une émulsion obtenue par (1) une méthode qui comprend l'introduction, dans une émulsion de résine, d'un gaz ne pouvant réagir avec l'émulsion de résine avec une forte agitation pour former une bulle fine et la dispersion de la bulle fine dans l'émulsion de résine et/ou (2) une méthode qui comprend la dispersion, dans un solvant, d'une particule fine d'une résine insoluble dans l'émulsion de résine, dans l'émulsion de résine.

9. Méthode d'utilisation de la composition de revêtement en poudre préparée par la méthode de la revendication 7, laquelle méthode comprend, en utilisation, l'addition d'un milieu aqueux à l'ensemble, avec ensuite mélange avec agitation et liquéfaction.
